# EUROPÄISCHE PATENTSCHRIFT

(11) **EP 1 030 174 B1**
(45) Veröffentlichungstag und Bekanntmachung des Hinweises auf die Patenterteilung: **30.07.2008**
(21) Anmeldenummer: 99125340.2
(22) Anmeldetag: 20.12.1999
(51) Int. Cl.: G01N 27/07, G01N 21/03

(54) **Messeinrichtung sowie Verfahren zu deren Herstellung**
Measuring apparatus and method for making the same
Appareil de mesure et procédé pour sa fabrication

(30) Priorität: 19.02.1999 DE 19907164
(43) Veröffentlichungstag der Anmeldung: 23.08.2000
(73) Patentinhaber: Micronas GmbH, 79108 Freiburg i. Br. (DE)
(72) Erfinder: Igel, Günter Dipl.Ing., D-79331 Teningen (DE); Gahle, JürgenDr.Ing., D-79312 Emmendingen (DE); Lehmann, Mirko, D-79106 Freiburg (DE)
(74) Vertreter: Huwer, Andreas

(56) Entgegenhaltungen:
- EP-A- 0 299 778
- WO-A-93/22678
- WO-A-99/60392
- US-A- 5 278 012
- US-A- 5 851 489
- BAUMANN W H ET AL: "Microelectronic sensor system for microphysiological application on living cells" SENSORS AND ACTUATORS B,CH,ELSEVIER SEQUOIA S.A., LAUSANNE, Bd. 55, Nr. 1, 25. April 1999 (1999-04-25), Seiten 77-89, XP004175066 ISSN: 0925-4005

## Beschreibung

Die Erfindung bezieht sich auf eine Meßeinrichtung zum Untersuchen eines insbesondere flüssigen oder fließfähigen Mediums sowie auf ein Verfahren zum Herstellen einer solchen Meßeinrichtung.

Aus WO 95/31716 kennt man bereits eine Meßeinrichtung, die auf einer Substratschicht eine elektrisch leitfähige Schicht aufweist, die zwei elektrisch gegeneinander isolierte, jeweils in der Ebene der Schicht angeordnete Schichtbereiche hat. Die beiden Schichtbereiche bilden Elektroden, die jeweils etwa die Form eines Kammes aufweisen. Die Schichtbereiche greifen mit ihren Kammstrukturen ineinander. Die vorbekannte Meßeinrichtung hat sich in der Praxis vor allem zur physiologischen Untersuchung von biologischen Zellen bewährt, die in einem Nährmedium angeordnet sind und während der Messung an der Oberfläche der Substratschicht und den darauf befindlichen planaren leitfähigen Schichtbereichen anhaften. Mit der vorbekannten Meßeinrichtung können einerseits Leitfähigkeitsmessungen an einem im Auflagebereich der Zellen befindlichen Zellmembran-Bereich der Zellen durchgeführt werden und andererseits ermöglicht die Meßeinrichtung aber auch ein kapazitives Auskoppeln elektrischer Signale aus der Zellmembran. Ein Nachteil der vorbekannten Meßeinrichtung besteht doch noch darin, daß sie nur an der den leitfähigen Schichtbereichen und der Substratschicht zugewandten Unterseite der Zellen eine Untersuchung der Zellen ermöglicht. Es hat sich jedoch gezeigt, dass biologische Zellen in unterschiedlichen Bereichen Ihrer Zellmembran unterschiedliche elektrische und/oder optische Eigenschaften aufweisen können, die beispielsweise durch eine lokal unterschiedliche Diffusion in der Zellflüssigkeit der Zelle befindlicher Ionen oder Proteine hervorgerufen sein können.

Die WO 93/22678 A2 beschreibt eine Vorrichtung zur Untersuchung molekularer Strukturen innerhalb einer zu untersuchende Substanz. Die Vorrichtung umfasst zwei Elektroden, eine in einer Aussparung eines Halbleitersubstrats angeordnete untere Elektrode sowie eine erhöht gegenüber der Aussparung angeordnete obere Elektrode. Zwischen der oberen dieser Elektroden und dem Halbleitersubstrat sind eine Titanschicht und eine Siliziumnitrid-Schicht angeordnet.

Aus der nachveröffentlichten WO 99/60392 A1 ist ferner eine Vorrichtung bekannt, die auf einem Substrat einen Schichtstapel mit mehreren übereinander angeordneten Schichten aufweist. Der Schichtstapel hat zwei von dem Substrat beabstandete elektrisch leitende Schichten und eine zwischen diesen angeordnete dielektrische, aus einem Gummiwerkstoff bestehende Schicht. Der Schichtstapel weist ein etwa zylindrische Ausnehmung auf, die sich quer zu den Schichtungsebenen der Schichten erstreckt und an ihrem Boden an das Substrat und seitlich an die einzelnen Schichten angrenzt

Die Aufgabe der vorliegenden Erfindung besteht darin, eine Messeinrichtung der eingangs genannten Art zur Verfügung zu stellen, die einfach und mit geringem Herstellungsaufwand realisierbar ist, sowie ein Verfahren zur Herstellung einer solchen Messeinrichtung zur Verfügung zu stellen.

Diese Aufgabe wird bezüglich der Messeinrichtung jeweils mit den Merkmalen der Ansprüche 1 und 2 gelöst

Die Messeinrichtung weist einen Schichtstapel mit einer Ausnehmung auf, an die wenigstens eine elektrisch und/oder optisch leitfähige Schicht oder ein Schichtbereich des Schichtstapels angrenzt, die (der) vom Boden der Ausnehmung durch wenigstens eine weitere Schicht beabstandet ist. An der Begrenzungswand der Ausnehmung ergibt sich somit ein elektrisch leitfähiger und/oder optisch durchlässiger Wandungsbereich, der mit Abstand zum Boden der Ausnehmung angeordnet ist. Dadurch ist es möglich, an einer vom Boden der Ausnehmung beabstandeten Stelle elektrische und/oder optische Signale in das in der Ausnehmung befindlichen Medium abzugeben oder aus diesem zu empfangen. Bei einer Meßeinrichtung, bei der an die Ausnehmung angrenzende und vom Boden der Ausnehmung beabstandete Schicht oder der Schichtbereich elektrisch leitfähig ist, können beispielsweise Leitfähigkeitsmessungen oder kapazitive Messungen in einer quer zur Erstreckungsebene der Substratschicht oder einer parallel dazu verlaufenden Richtung an dem in der Ausnehmung befindlichen Medium und/oder darin enthaltener Partikel, besipielsweise biologischer Zellen, die sich am Boden der Ausnehmung angelagert haben, durchgeführt werden. Bei einer Meßeinrichtung, bei der die an die Ausnehmung angrenzende, vom Boden der Ausnehmung beabstandete Schicht oder der Schichtbereich optisch durchlässig ist, ist es sogar möglich, in einer quer zur Erstreckungsebene der Substratschicht oder parallel dazu verlaufenden Richtung die optische Transmission oder Emmission in dem Medium zu messen. Eine Transmissionsmessung kann beispielsweise in der Weise erfolgen, daß durch eine der optisch durchlässigen Schichten oder Schicht bereiche optische Strahlung in die Ausnehmung eingekoppelt und durch das Medium zu der anderen optisch durchlässigen Schicht transmittiert und mittels dieser Schicht wieder aus der Ausnehmung ausgekoppelt wird. Die Meßeinrichtung ermöglicht also eine dreidimensionale Untersuchung eines in der Aufnahme befindlichen Mediums.

In vorteilhafter Weise ergibt sich durch die mit Abstand vom Boden der Ausnehmung in der Begrenzungswand der Ausnehmung angeordnete und mit ihrer aktiven Oberfläche quer zur Schichtungsebene der Substratschicht orientierte elektrisch und/oder optisch leitfähige Schicht eine kompakt aufgebaute Meßeinrichtung, die nur eine vergleichsweise kleine Grundfläche auf der Substratschicht benötigt. Bei einer als Halbleiterchip ausgebildeten Meßeinrichtung kann dadurch teure Chipfläche eingespart werden.

Bei einer vorteilhaften Ausführungsform der Erfindung weist zumindest eine Schicht des Schichtstapels wenigstens zwei, in der Schichtungsebene dieser Schicht nebeneinander angeordnete, optisch leitfähige Schichtbereiche auf, die jeweils an die Ausnehmung angrenzen und optisch gegeneinander isoliert sind. Das in der Ausnehmung befindliche Medium kann dann mit Abstand vom Boden der Ausnehmung in der Schichtungsebene dieser Schicht optisch untersucht werden. Dabei ist es sogar möglich, dass die Schicht mehr als zwei, jeweils seitlich an die Ausnehmung angrenzende optisch leitende Schichtbereiche aufweist, so dass das in der Ausnehmung befindliche Medium dann in unterschiedlichen Richtungen in der Schichtungsebene dieser Schicht untersucht werden kann, je nachdem, zwischen welchen dieser Schichtbereiche in der Ausnehmung eine optische Messstrecke gebildet wird.

Besonders vorteilhaft ist, wenn quer zur Schichtungsebene beidseits einer optisch leitfähigen Schicht oder eines optisch leitfähigen Schichtbereiches jeweils eine metallische Schicht und/oder ein metallischer Schichtbereich als optische Reflexionsschicht angeordnet ist. Abstrahlverluste in zu der optisch leitfähigen Schicht benachbarte Schichten werden dadurch reduziert. Die zu der optischen Schicht benachbarten metallischen Schichten können gegebenenfalls an die Ausnehmung angrenzen, so dass diese Schichten außer einer Führung der optischen Strahlung in der optisch leitfähigen Schicht auch Ein- und/oder Auskoppeln elektrischer Signale in das in der Ausnehmung befindliche Medium ermöglichen.

Bei einer besonders vorteilhaften Ausführungsform der Erfindung ist vorgesehen, dass an der Begrenzungswand der Ausnehmung wenigstens ein optisch leitfähiger Schichtbereich gegenüber zumindest einem dazu benachbarten Schichtbereich einen Vorsprung bildet und dass der den Vorsprung aufweisende Schichtbereich und der dazu benachbarte Schichtbereich vorzugsweise in unterschiedlichen Schichtungsebenen des Schichtstapels angeordnet sind. Der Vorsprung ermöglicht einen kleinen optischen Strahlungswiderstand zwischen der Schicht und dem Medium.

Bei einer vorteilhaften Ausführungsform der Erfindung Ist vorgesehen, dass die Begrenzungswand der Ausnehmung wenigstens eine an einer optisch durchlässlgen Schicht und/oder einem optisch durchlässigen Schichtberelch befindliche Einkoppelstelle zum gerichteten Abstrahlen optischer Strahlung in die Ausnehmung aufweist, dass in Abstrahlrichtung der Einkoppelstelle gegenüberliegend In der Begrenzungswand wenigstens eine an einer optisch durchlässigen Schicht und/oder einem optisch durchlässigen Schichtbereich befindliche Auskoppelstelle angeordnet ist, und dass die Einkoppelstelle und/oder die Auskoppelstelle an einem über die beidseits dazu benachbarten Schichten in die Aufnehmung vorstehenden Vorsprung angeordnet ist (sind), der gegen die Rückstellkraft seines Werkstoffs aus einer Ruhelage quer zur Schichtungsebene der den Vorsprung aufweisenden Schicht auslenkbar ist. Die Messeinrichtung ermöglicht dann die Messung dynamischer Druckveränderungen indem in der Ausnehmung befindlichen, zu untersuchenden Medium. Eine dynamische Druckveränderung in dem Medium oder eine sich quer zur Erstreckungsrichtung des Vorsprungs in dem Medium ausbreitende Druckwelle bewirkt eine Auslenkung des die Ein- oder Auskoppelstelle aufweisenden Vorsprungs aus der Ruhelage, wodurch der Übertragungsweg von an der Einkoppelstelle in das Medium eingestrahlter optischer Strahlung zu der Auskoppelstelle verändert wird. Eine dynamische Druckveränderung in dem Medium führt also zu einer Veränderung des an der Auskoppelstelle aus dem Medium ausgekoppelten optischen Signals, was mit einem entsprechenden optischen Sensor detektiert werden kann. Dieser kann in dem Schichtstapel integriert und/oder mit der auskoppelseitigen, optisch durchlässigen Schicht oder dem auskoppelseitigen, optisch durchlässigen Schichtbereich optisch verbunden sein.

Eine zweckmäßige Ausgestaltung der Erfindung sieht vor, dass im Boden der Ausnehmung zum Untersuchen des in der Ausnehmung befindlichen Mediums wenigstens ein Sensor angeordnet ist. Der Sensor kann beispielsweise ein Feldeffekttransistor zur Detektion in dem Medium enthaltener Ionen, ein Sensor zur Messung eines Gasgehaltes und/oder ein optischer Sensor sein. Das in der Ausnehmung befindliche Medium kann dann noch weitergehender untersucht werden. So können beispielsweise bei einem in der Ausnehmung befindlichen Nährmedium, das eine biologische Zelle enthält, die sich am Boden der Ausnehmung anlagert, mittels des Sensors Messungen an der Zelle durchgeführt werden.

Vorteilhaft ist, wenn in der Ausnehmung eine ionenselektive Membran angeordnet ist, die vorzugsweise einen Vorsprung der Begrenzungswand der Ausnehmung hintergreift. Die an dem von der Membran abgedeckten Wandungsbereich befindlichen Schichten oder Schichtbereiche und/oder ein eventuell im Boden der Ausnehmung befindlicher Sensor ermöglichen dann eine Detektion bestimmter, in dem Medium enthaltener Ionen, für welche die Membran durchlässig ist, während andere Ionen oder Partikel von diesen Schichten und/oder Schichtbereichen und/oder dem Sensor ferngehalten werden. Bei einer Membran, die einen Vorsprung der Begrenzungswand der Ausnehmung hintergreift, ergibt sich ein besonders gutes Haftvermögen der Membran an dem Schichtstapel.

Bei einer vorteilhaften Ausführungsform der Erfindung ist vorgesehen, dass der Schichtstapel mehrere, arrayförmig angeordnete, vorzugsweise unterschiedliche Abmessungen aufweisende Ausnehmungen aufweist, die jeweils an wenigstens zwei optisch leitfähige Schichten oder Schichtbereiche angrenzen, und dass wenigstens einer der an die jeweilige Ausnehmung angrenzenden Schichten oder Schichtbereiche mit Abstand vom Boden der Ausnehmung angeordnet ist. Die Öffnungen der unterschiedlich bemessenen Ausnehmungen bilden dann einen mechanischen Filter für in dem zu untersuchenden Medium enthaltene Partikel, so dass mit den durch die einzelnen Ausnehmungen und die daran angrenzenden Schichten und/oder Schichtbereiche jeweils gebildeten Meßvorrichtungen Partikel unterschiedlicher Größe untersucht werden können. Auch können die Ausnehmungen der einzelnen Meßvorrichtungen unterschiedliche Volumina aufweisen, so daß je nach Menge des zu untersuchenden flüssigen oder fließfähigen Mediums eine Ausnehmung mit einem an die Menge des Mediums angepaßten Volumen gewählt werden kann.

Bezüglich des Verfahrens zum Herstellen einer Meßeinrichtung der eingangs genannten Art besteht die Lösung der vorstehend genannten Aufgabe darin, daß eine Substratschicht durch Aufbringen von Schichten mit einem Schichtstapel versehen wird, der zumindest zwei elektrisch und/oder optisch leitfähige Schichten aufweist, zwischen denen wenigstens eine elektrisch und/oder optisch isolierende Zwischenschicht angeordnet ist, und daß an der der Substratschicht abgewandten Seite des Schichtstapels eine Ausnehmung in den Schichtstapel eingebracht wird, welche die elektrisch und/oder optisch leitfähigen Schichten durchsetzt und/oder seitlich daran angrenzt.

Zusätzlich zu den bereits erwähnten Vorteilen der Meßeinrichtung hat das Verfahren den weiteren Vorteil, daß es sich gut in den Fertigungsprozeß zur Herstellung eines Halbleiterchips, insbesondere eines CMOS-Chips integrieren läßt. Die bei der Herstellung des Schichtstapels auf die Substratschicht aufgebrachten Schichten können nämlich zusätzlich auch für die Herstellung anderer in den Halbleiterchip zu integrierender Strukturen, wie beispielsweise Leiterbahnen, Transistoren und/oder Sensoren verwendet werden, indem diese Schichten in üblicher Weise maskiert werden, beispielsweise mittels photolithographischer Verfahren. Besonders vorteilhaft ist dabei, daß die Ausnehmung erst nach Fertigstellung sämtlicher für den Schichtstapel benötigter Schichten in den Schichtstapel eingebracht wird, d.h. die zur photolithographischen Herstellung der zusätzlichen Strukturen des Halbleiterchips benötigten Photolackschichten werden jeweils auf die einzelnen durchgängig aufgebrachten Schichten des Schichtstapels aufgetragen, bevor die Ausnehmung in den Schichtstapel eingebracht wird. Dadurch wird vermieden, daß die Ausnehmung die Ausbreitung des beispielsweise im Schleuderverfahren auf die Schichten aufgetragenen Photolacks an der Oberfläche der einzelnen Schichten behindert. Auch wird eine Rißbildung, die beim Auftragen einer Schicht auf eine Kante oder einen Absatz auftreten kann, durch das nachträgliche Einbringen der Ausnehmung in den Schichtstapel vermieden.

Darüber hinaus kann eine der elektrisch und/oder optisch leitfähigen Schichten in wenigstens zwei elektrisch und/oder optisch leitfähige Schichtbereiche unterteilt werden, die elektrisch und/oder optisch gegeneinander isoliert werden. Dieser zusätzliche Schritt hat den Vorteil, daß die danach hergestellte Meßeinrichtung eine Untersuchung des in der Ausnehmung befindlichen Mediums in der Ebene der die Schichtbereiche aufweisenden elektrisch und/oder optisch leitfähigen Schicht ermöglicht.

Eine besonders vorteilhafte Ausführungsform des Verfahrens sieht vor, daß an der Begrenzungswand der Ausnehmung im Bereich einer elektrisch und/oder optisch isolierenden Schicht und/oder eines elektrisch und/oder optisch isolierenden Schichtbereichs durch Abtragen von Schichtmaterial ein Rücksprung gegenüber einer benachbartenelektrischund/oderoptischleitfähigenSchichtund/oder einem benachbarten elektrisch und/oder optisch leitfähigen Schichtbereich gebildet wird. Bei einer elektrisch leitfähigen Schicht und/oder einem Schichtbereich ergibt sich dann ein kleiner Übergangswiderstand zwischen der Schicht beziehungsweise dem Schichtbereich und dem in der Ausnehmung befindlichen, zu untersuchenden Medium. Elektrische Signale können dadurch besser in das Medium ein- und/oder ausgekoppelt werden. Entsprechend ermöglicht der Rücksprung bei einer optisch leitfähigen Schicht und/oder einem Schichtbereich einen geringen optischen Übergangswiderstand zwischen der Schicht beziehungsweise dem Schichtbereich und dem Medium.

Bei einer besonders vorteilhaften Ausführungsform des Verfahrens ist vorgesehen, daß der Schichtstapel zum Einbringen der Ausnehmung mit einem Ätzmittel in Berührung gebracht wird und daß die Schichtmaterialien der einzelnen Schichten und/oder Schichtbereiche zum Einformen des Rücksprungs in die Begrenzungswand der Ausnehmung so ausgewählt werden, daß sie bezüglich des Ätzmittels unterschiedliche Ätzraten aufweisen. Die Begrenzungswand der Ausnehmung kann dadurch auf einfache Weise mit Rücksprüngen oder einer schichtweisen Profilierung versehen werden.

Vorteilhaft ist, wenn das Substrat mit einem Schichtstapel versehen wird, der quer zur Schichtungsebene seiner Schichten beidseits einer optisch leitfähigen Schicht oder eines optisch leitfähigen Schichtbereichs jeweils eine metallische Schicht als optische Reflexionsschicht aufweist. Die metallischen Schichten dienen dann einerseits als optische Reflexionsschicht und können andererseits aber auch zum Einkoppeln elektrischer Signale in und/oder zum Auskoppeln elektrischer Signale aus dem Medium genutzt werden.

Weitere vorteilhafte Ausführungsformen des Verfahrens sind in den Unteransprüchen beschrieben.

Nachfolgend sind Ausführungsbeispiele der Erfindung anhand der Zeichnung näher erläutert. Es zeigen:
- Fig. 1: einen Querschnitt durch eine Meßeinrichtung, die einen Schichtstapel mit einer ein flüssiges Medium enthaltenden Ausnehmung aufweist, deren Begrenzungswand eine Profilierung mit schichtweisen Vor- und Rücksprüngen hat,
- Fig. 2: eine Darstellung ähnlich Figur 1, wobei jedoch das Medium nicht dargestellt ist und wobei der Schichtstapel Schichten mit mehreren Schichtbereichen aufweist und
- Fig. 3: eine Aufsicht auf die in Figur 2 gezeigte Meßeinrichtung.

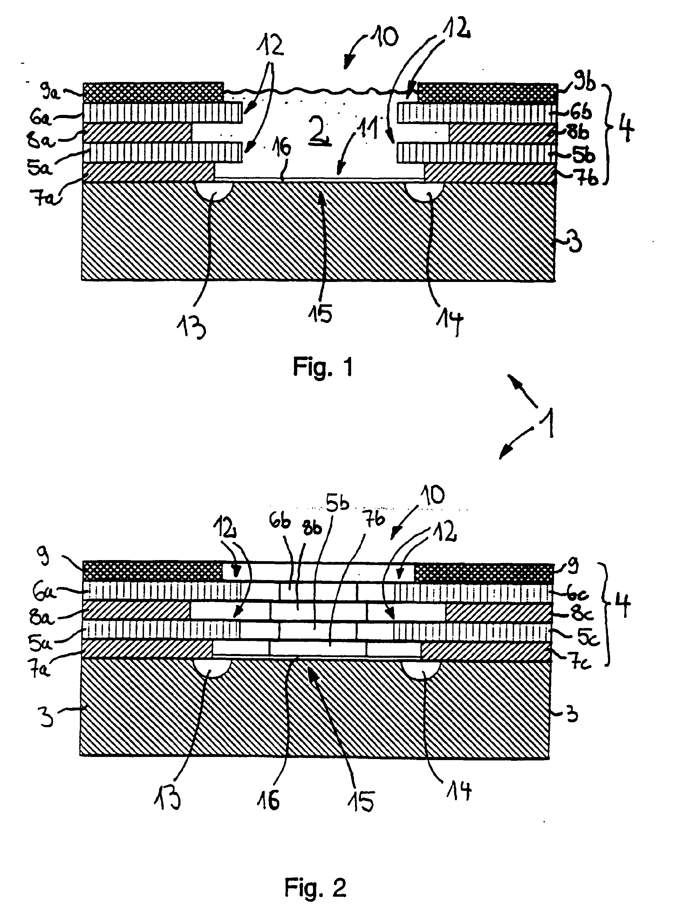

Eine im ganzen mit 1 bezeichnete Meßeinrichtung (Fig. 1) zum Untersuchen eines flüssigen oder fließfähigen Mediums 2 weist einen auf einer Substratschicht 3 angeordneten Schichtstapel 4 auf, der mehrere elektrisch leitfähige Schichtbereiche 5a, 6a hat. Zwischen quer zur den Schichtungsebenen des Schichtstapels 4 zueinander benachbarten Schichtbereichen 5a, 6a beziehungsweise 5b, 6b Ist jeweils ein elektrisch isolierender Schichtbereich 8a, 8b angeordnet, der aus einem optisch leitfähigen Material besteht. Zwischen der Substratschicht 3 und den Schichtbereichen 5a, 5b ist jeweils ein weiterer optisch leitfähiger und elektrisch isolierender Schichtbereich 7a, 7b angeordnet. An der der Substratschicht 3 abgewandten Oberseite des Schichtstapels 4 weist dieser eine Passivierungsschicht 9a, 9b auf. In dem Ausführungsbeispiel gemäß Figur 2 ist die Passivierungsschicht mit 9 bezeichnet.

Der Schichtstapel 4 weist an seiner der Substratschicht 3 abgewandten Oberseite eine Ausnehmung 10 auf, an welche die Schichtbereiche 5a, 5b, 6a, 6b, 7a, 7b, 8a, 8b, 9a, 9b des Schichtstapels 4 seitlich beidseits angrenzen. Die Ausnehmung 10 ist als Durchlasskanal ausgebildet, der den Schichtstapel 4 in Richtung seiner Schichtungsebenen etwa rechtwinklig zur Zeichenebene in Figur 1 durchsetzt.

Das in der Ausnehmung 10 befindliche Medium 2 kann mittels der elektrisch leitfähigen Schichtbereiche 5a, 5b, 6a, 6b elektrisch und mittels der optisch leitfähigen Schichtbereiche 7a, 7b, 8a, 8b optisch untersucht werden. So kann beispielsweise die Leitfähigkeit des Mediums 2 in unterschiedlichen Schichtungsebenen des Schichtstapels 4 durch Anlegen einer elektrischen Spannung zwischen den Schichtbereichen 5a, 5b und/oder den Schichtbereichen 6a, 6b und Messen des elektrischen Stromes zwischen den durch diese Schichtbereiche 5a, 5b, 6a, 6b gebildeten Elektroden gemessen werden. Die Leitfähigkeit des Mediums 2 kann aber auch in einer rechtwinklig zu den Schichtungsebenen des Schichtstapels 4 verlaufenden Richtung bestimmt werden, indem eine elektrische Spannung zwischen die Schichtbereiche 5a, 6a und/oder 5b, 6b angelegt und der elektrische Strom zwischen diesen Schichtbereichen 5a, 6a beziehungsweise 5b, 6b gemessen wird. In entsprechender Weise kann die Leitfähigkeit des Mediums 2 aber auch in einer schräg zu den Schichtungsebenen des Schichtstapels 4 verlaufenden Richtung bestimmt werden, wenn zwischen beidseits der Ausnehmung 10 und in unterschiedlichen Schichtungsebenen angeordneten Schichtbereichen 5a, 6b beziehungsweise 5b, 6a eine elektrische Spannung angelegt und der Strom zwischen diesen Schichtbereichen 5a, 6b beziehungsweise 5b, 6a gemessen wird. In entsprechender Weise kann mittels der elektrisch leitfähigen Schichtbereiche 5a, 5b, 6a, 6b die Dielektrizitätszahl des Mediums in unterschiedlichen Richtungen gemessen werden.

Mit Hilfe der optisch leitfähigen Schichtbereiche 7a, 7b, 8a, 8b kann das Medium 2 außerdem optisch untersucht werden. So kann beispielsweise die optische Transmission des Mediums 2 in unterschiedlichen Richtungen gemessen werden, indem jeweils durch eine der Schichtbereiche 7a, 7b, 8a, 8b optische Strahlung in das Medium 2 eingekoppelt und der durch das Medium 2 transmittierte Strahlungsanteil mittels einer oder mehrerer anderer optisch leitfähiger Schichtbereiche 7a, 7b, 8a, 8b wieder aus dem Medium 2 ausgekoppelt wird. Selbstverständlich können die Schichtbereiche 5a, 5b, 6a, 6b, 7a, 7b, 8a, 8b aber auch zum Auskoppeln von dem Medium 2 selbst ausgehender elektrischer und/oder optischer Signale dienen. So können beispielsweise mittels der optisch leitfähigen Schichtbereiche 7a, 7b, 8a, 8b Fluoreszenzmessungen an dem Medium 2 durchgeführt werden, wenn dieses beispielsweise durch die an der Oberseite der Ausnehmung 10 befindliche Öffnung hindurch mit optischer Strahlung zur Fluoreszenz angeregt wird. Mittels der elektrisch leitfähigen Schichtbereiche 5a, 5b, 6a, 6b können außerdem an in dem Medium 2 befindlichen elektrisch aktiven Partikeln, wie zum Beispiel in einem Nährmedium enthaltenen Nervenzellen elektrische Signale abgegriffen werden.

Bei dem Ausführungsbeispiel nach Figur 1 bestehen die Schichtbereiche 5a, 5b, 6a, 6b aus einem metallischen Material, das als Reflexionsschicht für in den Schichtbereichen 7a, 7b, 8a, 8b transportierte optische Signale dient. Die Schichtbereiche 7a, 7b, 8a, 8b ermöglichen dadurch eine verlustarme optische Wellenleitung.

In Figur 1 und 2 ist erkennbar, daß die seitlichen Begrenzungwände der Ausnehmung 10 schichtweise profiliert sind. Die elektrisch leitfähigen Schichtbereiche 5a, 5b, 6a, 6b bilden jeweils gegenüber den dazu quer zu den Schichtungsebenen des Schichtstapels 4 benachbarten, elektrisch isolierenden Schichtbereichen 7a, 7b, 8a, 8b, 9a, 9b einen Vorsprung 12. Dadurch wird zwischen den Schichtbereichen 5a, 5b, 6a, 6b und dem Medium 2 jeweils ein besonders geringer elektrischer Kontaktwiderstand erreicht. In Figur 1 und 2 ist erkennbar, daß die Begrenzungswand der Ausnehmung die ausgehend von der dem Substrat abgewandten Oberfläche des Schichtstapels zum Boden der Ausnehmung hin an wenigstens zwei Stellen zurückspringt und daß die Begrenzungswand zwischen diesen Stellen wenigstens eine vorspringende Stelle aufweist.

Bei der Herstellung der Meßeinrichtung 1 werden zunächst die einzelnen Schichten des Schichtstapels 4 nacheinander auf die Substratschicht 3 aufgebracht, beispielsweise durch Bedampfen, Sputtern, Galvanisieren oder dergleichen an sich bekannten Verfahren zum Erstellen einer Schicht. Nach Fertigstellung des Schichtstapels 4 wird auf die Passivierungsschicht 9a, 9b eine ätzfeste Maske aufgetragen, die in dem Bereich der in den Schichtstapel 4 einzubringenden Ausnehmung 10 eine Unterbrechung oder eine Aussparung aufweist. Danach wird die der Substratschicht 3 abgewandte, die Maske aufweisende Oberfläche des Schichtstapels 4 zum Einbringen der Ausnehmung 1 0 mit einem Ätzmittel in Berührung gebracht. Zum Einbringen der die Vorsprünge 12 und die jeweils benachbart dazu angeordneten Rücksprünge aufweisenden Profilierung in die seitliche Begrenzungswand der Ausnehmung 10 weisen die einzelnen Schichten des Schichtstapels 4 bezüglich des Ätzmittels unterschiedliche Ätzraten auf. Bei dem Ausführungsbeispiel nach Figur 1 haben beispielsweise die elektrisch isolierenden Schichten oder Schichtbereiche 7a, 7b, 8a, 8b, 9a, 9b eine größere Ätzrate als die elektrisch leitfähigen Schichten oder Schichtbereiche 5a, 5b, 6a, 6b. Im Bereich der Schichten 7a, 7b, 8a, 8b ergibt sich dadurch eine Unterätzung beziehungsweise ein Rücksprung. Da die Ausnehmung 10 erst nach Fertigstellung des Schichtstapels 4 in diesen eingeäzt wird, läßt sich das Herstellungsverfahren für die Meßeinrichtung 1 gut in den Fertigungsprozeß einer Halbleiterfertigung integrieren.

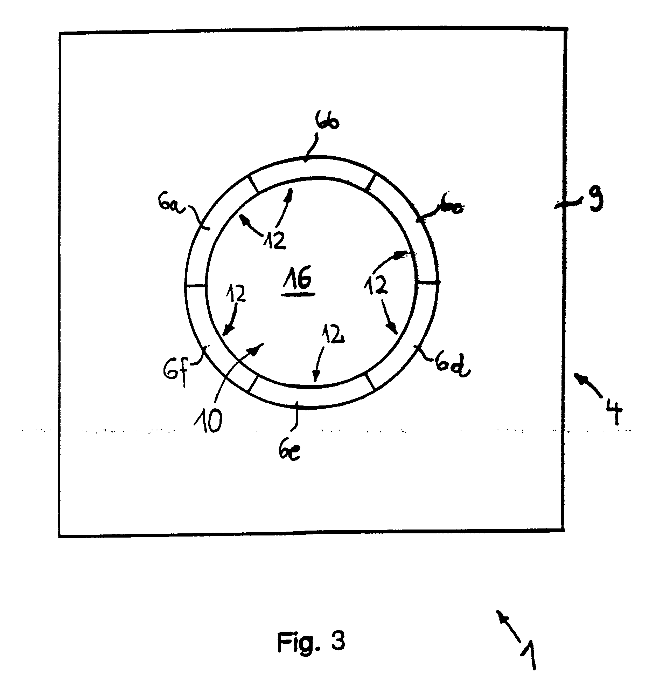

Bei dem Ausführungsbeispiel nach Figur 2 ist die Ausnehmung 10 als Trog mit einer umlaufenden Begrenzungswand ausgebildet (Figur 3). Die elektrisch leitfähigen Schichten des Schichtstapels 4 weisen jeweils mehrere, elektrisch gegeneinander isolierte Schichtbereiche 5a, 5b, 5c, 6a, 6b, 6c, 6d, 6e, 6f auf. Entsprechend weisen die optisch leitfähigen, elektrisch isolierenden Schichten des Schichtstapels 4 jeweils mehrere, optisch gegeneinander isolierte Schichtbereiche 7a, 7b,7c sowie 8a, 8b, 8c auf. Das Medium 2 kann dadurch in verschiedenen Schichtungsebenen des Schichtstapels 4 jeweils in unterschiedlichen Richtungen elektrisch oder optisch untersucht oder behandelt werden. So können beispielsweise zwischen jeweils zwei der in Figur 3 erkennbaren Schichtbereiche 6a, 6b, 6c, 6d, 6e, 6f elektrische Meßstrecken zur richtungsaufgelösten Messung der elektrischen Leitfähigkeit des Mediums 2 in der Schichtungsebene der Schicht gebildet werden.

Bei den Ausführungsbeispielen gemäß Figur 1 und 2 ist jeweils am Boden 11 der Ausnehmung 10 ein Sensor angeordnet, der als ionenselektiver Feldeffekttransistor mit in die Substratschicht 3 integriertem Drain-Bereich 13 und Source-Bereich 14 ausgebildet ist. Der elektrisch aktive Gate-Bereich 15 des Sensors ist am Boden der Ausnehmung 10 angeordnet und durch eine Isolationsschicht 16 galvanisch von dem Medium 2 getrennt. Mit Hilfe des Sensors sind zusätzliche Untersuchungen an dem Medium 2 möglich. So können beispielsweise an in dem Medium 2 enthaltenen Partikeln, die beispielsweise biologische Zellen oder dergleichen Bio-Komponenten sein können, mittels des Sensors elektrische Signale abgegriffen werden.

Erwähnt werden soll noch, daß der Schichtstapel eine Vielzahl von Ausnehmungen 10 aufweisen kann, die beispielsweise in Form eines Arrays angeordnet sein können. Dabei sind die an die einzelnen Ausnehmungen 10 angrenzenden elektrisch und/oder optisch leitfähigen Schichtungsbereiche 5, 6, 7, 8 vorzugsweise elektrisch und/oder optisch voneinander getrennt, so daß sich auf der Substratschicht 3 eine Vielzahl von voneinander unabhängigen Meßeinrichtungen zum Untersuchen des Mediums 2 ergeben. Die Ausnehmungen 10 können zur mechanischen Filterung in dem Medium 2 enthaltener Partikel unterschiedliche Abmessungen aufweisen.

## Patentansprüche

1. Messeinrichtung (1) zum Untersuchen eines insbesondere flüssigen oder fließfähigen Mediums (2), die wenigstens zwei auf einer Substratschicht (3) befindliche, elektrisch leitfähige Schichten oder Schlchtbereiche (5a, 5b, 5c, 6a, 6b, 6c, 6d, 6e, 6f) aus einem Festkörpermaterial aufweist, die durch eine elektrisch isolierende und optisch leitfähige Schicht (8a, 8b, 8c) voneinander getrennt und in einem Schichtstapel (4) angeordnet sind, der mehrere auf der Substratschicht (3) übereinander angeordnete Schichten aufweist, wobei der Schichtstapel (4) an seiner der Substratschicht (3) abgewandten Seite eine Ausnehmung (10) aufweist, die an die wenigstens zwei elektrisch leitfähigen Schichten oder Schichtbereiche (5a, 5b, 5c, 6a, 6b, 6c, 6d, 6e,6f) angrenzt, und wobei wenigstens eine der wenigstens zwei in dem Schichtstapel (4) befindlichen elektrisch leitfähigen Schichten oder wenigstens einer der wenigstens zwei in dem Schichtstapel (4) befindlichen elektrisch leitfähigen Schichtbereiche (5a, 5b, 5c, 6a, 6b, 6c, 6d, 6e, 6f) mit Abstand vom Boden (11) der Ausnehmung (10) angeordnet ist.

2. Messeinrichtung (1) zum Untersuchen eines insbesondere flüssigen oder fließfähigen Mediums (2), die wenigstens zwei auf einer Substratschicht (3) befindliche optisch leitfähige Schichten oder Schichtbereiche (7a, 7b, 7c, 8a, 8b, 8c) aus einem Festkörpermaterial aufweist, die optisch gegeneinander isoliert und in einem Schichtstapel (4) angeordnet sind, der mehrere auf der Substratschicht (3) übereinander angeordnete Schichten aufweist, wobei der Schichtstapel (4) an seiner der Substratschicht (3) abgewandten Seite eine Ausnehmung (10) aufweist, die an die wenigstens zwei optisch leitfähigen Schichten oder Schichtbereiche (7a, 7b, 7c, 8a, 8b, 8c) angrenzt, und wobei wenigstens eine der wenigstens zwei in dem Schichtstapel (4) befindlichen optisch leitfähigen Schichten oder wenigstens einer der wenigstens zwei in dem Schichtstapel (4) befindlichen optisch leitfähigen Schichtbereiche (7a, 7b, 7c, 8a, 8b, 8c) mit Abstand vom Boden (11) der Ausnehmung (10) angeordnet ist.

3. Messeinrichtung nach Anspruch 2, **dadurch gekennzeichnet, dass** zumindest eine Schicht des Schichtstapels wenigstens zwei, in der Schichtungsebene dieser Schicht nebeneinander angeordnete, optisch leitfähige Schichtbereiche (5a, 5b, 5c, 6a, 6b, 6c, 6d, 6e, 6f, 7a, 7b, 7c, 8a, 8b, 8c) aufweist, die jeweils an die Ausnehmung (10) angrenzen und optisch gegeneinander isoliert sind.

4. Messeinrichtung nach Anspruch 2 oder 3, **dadurch gekennzeichnet, dass** der Boden der Ausnehmung durch wenigstens eine optisch leitfähige Schicht oder einen optisch leitfähigen Schichtberelch gebildet ist

5. Messeinrichtung nach einem der Ansprüche 2 bis 4, **dadurch gekennzeichnet, dass** sie parallel zur Schichtungsebene beidseits einer optisch leitfähigen Schicht oder eines optisch leittahigen Schichtbereichs (7a, 7b, 7c, 8a, 8b, 8c) jeweils eine metallische Schicht und/oder ein metallischer Schichtbereich (5a, 5b, 5c, 6a, 6b, 6c, 6d, 6e, 6f) als optische Reflexionsschicht aufweist.

6. Messeinrichtung nach einem der Ansprüche 2 bis 5, **dadurch gekennzeichnet, dass** an der Begrenzungswand der Ausnehmung (10) wenigstens ein optisch leitfähiger Schichtbereich (5a, 5b, 5c, 6a, 6b, 6c, 6d, 6e, 6f) gegenüber zumindest einem dazu benachbarten Schichtbereich (7a, 7b, 7c, 8a, 8b, 8c) einen Vorsprung (12) bildet und dass der den Vorsprung (12) aufweisende Schichtbereich (5a, 5b, 5c, 6a, 6b, 6c, 6d, 6e, 6f) und der dazu benachbarte Schichtbereich (7a, 7b, 7c, 8a, 8b, 8c) vorzugsweise in unterschiedlichen Schichtungsebenen des Schichtstapels (4) angeordnet sind.

7. Messeinrichtung nach einem der Ansprüche 2 bis 6, **dadurch gekennzeichnet, dass** die Begrenzungswand der Ausnehmung (10) wenigstens eine an einer optisch durchlässigen Schicht und/oder einem optisch durchlässigen Schichtbereich (7a, 7b, 7c, 8a, 8b, 8c) befindliche Einkoppeistelle zum gerichteten Abstrahlen optischer Strahlung in die Ausnehmung (10) aufweist, dass in Abstrahlrichtung der Einkoppelstelle gegenüberliegend in der Begrenzungswand wenigstens eine an einer optisch durchlässigen Schicht und/oder einem optisch durchlässigen Schichtbereich (7a, 7b, 7c, 8a, 8b, 8c) befindliche Auskoppelstelle angeordnet ist, und dass die Einkoppelstelle und/oder die Auskoppeistelle an einem über die beidseits dazu benachbarten Schichten in die Aufnehmung (10) vorstehenden Vorsprung (12) angeordnet ist (sind), der gegen die Rückstellkraft seines Werkstoffs aus einer Ruhelage quer zur Schichtungsebene der den Vorsprung (12) aufweisenden Schicht auslenkbar ist.

8. Messeinrichtung nach einem der Ansprüche 2 bis 7, **dadurch gekennzeichnet, dass** im Boden (11) der Ausnehmung (10) zum Untersuchen des in der Ausnehmung (10) befindlichen Mediums (2) wenigstens ein Sensor angeordnet ist.

9. Messeinrichtung nach einem der Ansprüche 2 bis 8, **dadurch gekennzeichnet, dass** in der Ausnehmung (10) eine ionenselektive Membrane angeordnet ist, die vorzugsweise einen Vorsprung (12) der Begrenzungswand der Ausnehmung (10) hintergreift.

10. Messeinrichtung nach einem der Ansprüche 2 bis 9, **dadurch gekennzeichnet, dass** der Schichtstapel (4) mehrere, arrayförmig angeordnete, vorzugsweise unterschiedliche Abmessungen aufweisende Ausnehmungen (10) aufweist, die jeweils an wenigstens zwei optisch leitfähige Schichten oder Schichtbereiche (7a, 7b, 7c, 8a, 8b, 8c) angrenzen, und dass wenigstens einer der an die jeweilige Ausnehmung angrenzenden Schichten oder Schichtbereiche (8a, 8b, 8c) mit Abstand vom Boden (11) der Ausnehmung angeordnet ist.

11. Verfahren zum Herstellen einer Messeinrichtung nach einem der Ansprüche 1 bis 10, wobei eine Substratschicht (3) durch Aufbringen von Schichten mit einem Schichtstapel (4) versehen wird, der zumindest zwei elektrisch und/oder optisch leitfähige Schichten aufweist, zwischen denen wenigstens eine elektrisch und/oder optisch isolierende Zwischenschicht angeordnet ist,
wobei an der der Substratschicht (3) abgewandten Seite des Schichtstapels (4) eine Ausnehmung (10) in den Schichtstapel (4) eingebracht wird, welche die elektrisch und/oder optisch leitfähigen Schichten durchsetzt und/oder seitlich daran angrenzt.

12. Verfahren nach Anspruch 11,
wobei die vom Boden der Ausnehmung beabstandete, elektrisch und/oder optisch leitfähige Schicht In wenigstens zwei elektrisch und/oder optisch leitfähige Schichtbereiche (5a, 5b, 5c, 6a, 6b, 6c, 6d, 6e, 6f, 7a, 7b, 7c, 8a, 8b, 8c) unterteilt wird, die elektrisch und/oder optisch gegeneinander isoliert werden.

13. Verfahren nach Anspruch 11 oder 12, **dadurch** gekenntzeichnet dass an der Begrenzungswand der Ausnehmung (10) im Bereich einer elektrisch und/oder optisch isolierenden Schicht und/oder eines elektrisch und/oder optisch Isolierenden Schichtberelchs (7a, 7b, 7c, 8a, 8b, 8c) durch Abtragen von Schichtmaterial ein Rücksprung gegenüber einer benachbarten elektrisch und/oder optisch leitfähigen Schicht und/oder einem benachbarten elektrisch und/oder optisch leitfähigen Schichtbereich (5a, 5b, 5c, 6a, 6b, 6c, 6d, 6e, 6f) gebildet wird.

14. Verfahren nach einem der Ansprüche 1 bis 13, **dadurch gekennzeichnet, dass** der Schichtstapel (4) zum Einbringen der Ausnehmung (10) mit einem Ätzmittel in Berührung gebracht wird und dass die Schichtmaterialien oder einzelnen Schichten und/oder Schichtbereiche (5a, 5b, 5c, 6a, 6b, 6c, 6d, 6e, 6f, 7a, 7b, 7c, 8a, 8b, 8c, 9, 9a, 9b) zum Einformen des Rücksprungs in die Begrenzungswand der Ausnehmung (10) so ausgewählt werden, dass sie bezüglich des Ätzmittels unterschiedliche Ätzraten aufweisen.

15. Verfahren nach einem der Ansprüche 11 bis 14, **dadurch gekennzeichnet, dass** das Substrat (3) mit einem Schichtstapel (10) versehen wird, der quer zur Schichtungsebene seiner Schichten beidseits einer optisch leitfähigen Schicht oder eines optisch leitfähigen Schichtbereichs (7a, 7b, 7c, 8a, 8b, 8c) jeweils eine metallische Schicht oder einen metallischen Schichtbereich (5a, 5b, 5c, 6a, 6b, 6c, 6d, 6e, 6f) als optische Reflexionsschicht aufweist.

16. Verfahren nach einem der Ansprüche 11 bis 15, **dadurch gekennzeichnet, dass** im Bodenbereich der Ausnehmung (10) oder in einem für den Bodenbereich vorgesehenen Bereich des Substrats (3) oder des Schichtstapels (4) ein Sensor angeordnet wird.

17. Verfahren nach einem der Ansprüche 11 bis 16, **dadurch gekennzeichnet, dass** in der Ausnehmung (10) eine ionenselektive Membrane angebracht wird.

18. Verfahren nach einem der Ansprüche 11 bis 17, **dadurch gekennzeichnet, dass** in den Schichtstapel (4) mehrere arrayförmig angeordnete, vorzugsweise unterschiedliche Abmessungen aufweisende Ausnehmungen (10) eingebracht werden.

## Claims

1. Measuring device (1) for investigating an in particular fluid or flowable medium (2), which device has at least two electrically conductive layers or layer regions (5a, 5b, 5c, 6a, 6b, 6c, 6d, 6e, 6f) which are located on a substrate layer (3), are made of a solid material, are separated from one another by an electrically insulating and optically conductive layer (8a, 8b, 8c) and are arranged in a layer stack (4) which has a plurality of layers which are arranged one on top of the other on the substrate layer (3), wherein the layer stack (4) has, at its side which faces away from the substrate layer (3), a recess (10) which adjoins the at least two electrically conductive layers or layer regions (5a, 5b, 5c, 6a, 6b, 6c, 6d, 6e, 6f), and wherein at least one of the at least two electrically conductive layers which are located in the layer stack (4) or at least one of the at least two electrically conductive layer regions (5a, 5b, 5c, 6a, 6b, 6c, 6d, 6e, 6f) which are located in the layer stack (4) is arranged spaced apart from the bottom (11) of the recess (10).

2. Measuring device (1) for investigating an in particular fluid or flowable medium (2), which device has at least two optically conductive layers or layer regions (7a, 7b, 7c, 8a, 8b, 8c) which are located on a substrate layer (3), are made of a solid material, are optically insulated from one another and are arranged in a layer stack (4) which has a plurality of layers which are arranged one on top of the other on the substrate layer (3), wherein the layer stack (4) has, at its side which faces away from the substrate layer (3), a recess (10) which adjoins the at least two optically conductive layers or layer regions (7a, 7b, 7c, 8a, 8b, 8c), and wherein at least one of the at least two optically conductive layers which are located in the layer stack (4) or at least one of the at least two optically conductive layer regions (7a, 7b, 7c, 8a, 8b, 8c) which are located in the layer stack (4) is arranged spaced apart from the bottom (11) of the recess (10).

3. Measuring device according to Claim 2,
**characterized in that** at least one layer of the layer stack has at least two optically conductive layer regions (5a, 5b, 5c, 6a, 6b, 6c, 6d, 6e, 6f, 7a, 7b, 7c, 8a, 8b, 8c) which are arranged in the layering plane of this layer, each adjoin the recess (10) and are optically insulated from one another.

4. Measuring device according to Claim 2 or 3,
**characterized in that** the bottom of the recess is formed by at least one optically conductive layer or one optically conductive layer region.

5. Measuring device according to one of Claims 2 to 4, **characterized in that** it has, parallel to the layering plane on both sides of an optically conductive layer or of an optically conductive layer region (7a, 7b, 7c, 8a, 8b, 8c), in each case one metallic layer and/or one metallic layer region (5a, 5b, 5c, 6a, 6b, 6c, 6d, 6e, 6f) as optical reflective layer.

6. Measuring device according to one of Claims 2 to 5, **characterized in that**, at the boundary wall of the recess (10), at least one optically conductive layer region (5a, 5b, 5c, 6a, 6b, 6c, 6d, 6e, 6f) forms a protrusion (12) with respect to at least one layer region (7a, 7b, 7c, 8a, 8b, 8c), which is adjacent to the at least one layer region (5a, 5b, 5c, 6a, 6b, 6c, 6d, 6e, 6f) and **in that** the layer region (5a, 5b, 5c, 6a, 6b, 6c, 6d, 6e, 6f) having the protrusion (12) and the neighbouring layer region (7a, 7b, 7c, 8a, 8b, 8c) are preferably arranged in different layering planes of the layer stack (4).

7. Measuring device according to one of Claims 2 to 6, **characterized in that** the boundary wall of the recess (10) has at least one coupling-in point, located at an optically transparent layer and/or an optically transparent layer region (7a, 7b, 7c, 8a, 8b, 8c), for targeted emission of optical radiation into the recess (10), **in that** at least one coupling-out point, located at an optically transparent layer and/or an optically transparent layer region (7a, 7b, 7c, 8a, 8b, 8c), is arranged in the boundary wall opposite the coupling-in point in the emission direction, and **in that** the coupling-in point and/or the coupling-out point is/are arranged at a protrusion (12) which projects over the layers, which are adjacent on both sides to the coupling-in point and/or coupling-out point, into the recess (10), with the protrusion being capable of being moved out of a rest position transversely to the layering plane of the layer having the protrusion (12) against the restoring force of its material.

8. Measuring device according to one of Claims 2 to 7, **characterized in that** at least one sensor is arranged in the bottom (11) of the recess (10) for investigating the medium (2) located in the recess (10).

9. Measuring device according to one of Claims 2 to 8, **characterized in that** an ion-selective membrane is arranged in the recess (10), which membrane preferably engages behind a protrusion (12) of the boundary wall of the recess (10).

10. Measuring device according to one of Claims 2 to 9, **characterized in that** the layer stack (4) has a plurality of recesses (10) which are arranged in the form of arrays, preferably have different dimensions and adjoin in each case at least two optically conductive layers or layer regions (7a, 7b, 7c, 8a, 8b, 8c), and **in that** at least one of the layers or layer regions (8a, 8b, 8c) which adjoin the respective recess is arranged spaced apart from the bottom (11) of the recess.

11. Method for producing a measuring device according to one of Claims 1 to 10, wherein a substrate layer (3) is provided with a layer stack (4) by applying layers, which layer stack has at least two electrically and/or optically conductive layers between which at least one electrically and/or optically conductive intermediate layer is arranged, wherein a recess (10) is made in the layer stack (4) on that side of the layer stack (4) that faces away from the substrate layer (3), which recess passes through the electrically and/or optically conductive layers and/or adjoins them laterally.

12. Method according to Claim 11, wherein the electrically and/or optically conductive layer, which is spaced apart from the bottom of the recess, is divided into at least two electrically and/or optically conductive layer regions (5a, 5b, 5c, 6a, 6b, 6c, 6d, 6e, 6f, 7a, 7b, 7c, 8a, 8b, 8c) which are electrically and/or optically insulated from one another.

13. Method according to Claim 11 or 12, **characterized in that** an indentation with respect to a neighbouring electrically and/or optically conductive layer and/or a neighbouring electrically and/or optically conductive layer region (5a, 5b, 5c, 6a, 6b, 6c, 6d, 6e, 6f) is formed at the boundary wall of the recess (10) in the region of an electrically and/or optically conductive layer and/or of an electrically and/or optically insulating layer region (7a, 7b, 7c, 8a, 8b, 8c) by removing layer material.

14. Method according to one of Claims 11 to 13,
**characterized in that** the layer stack (4) is brought into contact with an etchant for the purpose of making the recess (10) and **in that** the layer materials of the individual layers and/or layer regions (5a, 5b, 5c, 6a, 6b, 6c, 6d, 6e, 6f, 7a, 7b, 7c, 8a, 8b, 8c, 9, 9a, 9b) are selected, for forming the indentation into the boundary wall of the recess (10) such that they have different etching rates with respect to the etchant.

15. Method according to one of Claims 11 to 14, **characterized in that** the substrate (3) is provided with a layer stack (10) which has, transversely to the layering plane of its layers on both sides of an optically conductive layer or of an optically conductive layer region (7a, 7b, 7c, 8a, 8b, 8c), in each case one metallic layer or one metallic layer region (5a, 5b, 5c, 6a, 6b, 6c, 6d, 6e, 6f) as optical reflective layer.

16. Method according to one of Claims 11 to 15,
**characterized in that** a sensor is arranged in the bottom region of the recess (10) or in a region, which is provided for the bottom region, of the substrate (3) or of the layer stack (4).

17. Method according to one of Claims 11 to 16, **characterized in that** an ion-selective membrane is attached in the recess (10).

18. Method according to one of Claims 11 to 17, **characterized in that** a plurality of recesses (10) which are arranged in the form of arrays and preferably have different dimensions are made in the layer stack (4).

## Revendications

1. Dispositif de mesure (1) pour examiner un fluide (2) notamment liquide ou coulant, lequel présente au moins deux couches ou zones de couche électriquement conductrices (5a, 5b, 5c, 6a, 6b, 6c, 6d, 6e, 6f) en un matériau solide qui se trouvent sur une couche support (3), lesquelles sont séparées l'une de l'autre par une couche (8a, 8b, 8c) électriquement isolante et optiquement transparente et disposées dans une pile de couches (4) qui présente plusieurs couches disposées les unes au-dessus des autres sur la couche support (4), la pile de couches (4) présentant sur son côté à l'opposé de la couche support (3) un creux (10) qui est contigu aux au moins deux couches ou zones de couche électriquement conductrices (5a, 5b, 5c, 6a, 6b, 6c, 6d, 6e, 6f) et au moins l'une des au moins deux couches électriquement conductrices qui se trouvent dans la pile de couches (4) ou au moins l'une des au moins deux zones de couche électriquement conductrices (5a, 5b, 5c, 6a, 6b, 6c, 6d, 6e, 6f) qui se trouvent dans la pile de couches (4) étant disposée à un certain écart du fond (1) du creux (10).

2. Dispositif de mesure (1) pour examiner un fluide (2) notamment liquide ou coulant, lequel présente au moins deux couches ou zones de couche optiquement transparentes (7a, 7b, 7c, 8a, 8b, 8c) en un matériau solide qui se trouvent sur une couche support (3), qui sont isolées optiquement les unes des autres et sont disposées dans une pile de couches (4) qui présente plusieurs couches disposées les unes au-dessus des autres sur la couche support (3), la pile de couches (4) présentant sur son côté à l'opposé de la couche support (3) un creux (10) qui est contigu aux au moins deux couches ou zones de couche optiquement transparentes (7a, 7b, 7c, 8a, 8b, 8c) et au moins l'une des au moins deux couches optiquement transparentes qui se trouvent dans la pile de couches (4) ou au moins l'une des au moins deux zones de couche optiquement transparentes (7a, 7b, 7c, 8a, 8b, 8c) qui se trouvent dans la pile de couches (4) étant disposée à un certain écart du fond (11) du creux (10).

3. Dispositif de mesure selon la revendication 2, **caractérisé en ce qu'**au moins une couche de la pile de couches présente au moins deux zones de couche optiquement transparentes (5a, 5b, 5c, 6a, 6b, 6c, 6d, 6e, 6f, 7a, 7b, 7c, 8a, 8b, 8c) disposées l'une à côté de l'autre dans le plan de stratification de cette couche, lesquelles sont chacune contiguës au creux (10) et sont isolées optiquement l'une de l'autre.

4. Dispositif de mesure selon la revendication 2 ou 3, **caractérisé en ce que** le fond du creux est formé par au moins une couche optiquement transparente ou une zone de couche optiquement transparente.

5. Dispositif de mesure selon l'une des revendications 2 à 4, **caractérisé en ce qu'**il présente parallèlement au plan de stratification, des deux côtés d'une couche optiquement transparente ou d'une zone de couche optiquement transparente (7a, 7b, 7c, 8a, 8b, 8c), à chaque fois une couche métallique et/ou une zone de couche métallique (5a, 5b, 5c, 6a, 6b, 6c, 6d, 6e, 6f) faisant office de couche de réflexion optique.

6. Dispositif de mesure selon l'une des revendications 2 à 5, **caractérisé en ce qu'**au niveau de la paroi de délimitation du creux (10), au moins une zone de couche optiquement transparente (5a, 5b, 5c, 6a, 6b, 6c, 6d, 6e, 6f) forme par rapport à au moins une zone de couche (7a, 7b, 7c, 8a, 8b, 8c) voisine de celle-ci une proéminence (12) et que la zone de couche (5a, 5b, 5c, 6a, 6b, 6c, 6d, 6e, 6f) qui présente la proéminence (12) et la zone de couche (7a, 7b, 7c, 8a, 8b, 8c) voisine de celle-ci sont de préférence disposées dans des plans de stratification différents de la pile de couches (4).

7. Dispositif de mesure selon l'une des revendications 2 à 6, **caractérisé en ce que** la paroi de délimitation du creux (10) présente au moins un point d'injection qui se trouve sur une couche optiquement transparente et/ou zone de couche optiquement transparente (7a, 7b, 7c, 8a, 8b, 8c) pour la diffusion dirigée d'un rayonnement optique dans le creux (10), qu'au moins un point d'extraction qui se trouve sur une couche optiquement transparente et/ou zone de couche optiquement transparente (7a, 7b, 7c, 8a, 8b, 8c) est disposé dans la paroi de délimitation à l'opposé du point d'injection dans le sens du rayonnement et que le point d'injection et/ou le point d'extraction est (sont) disposé(s) sur une proéminence (12) faisant saillie dans le creux (10) au-dessus des deux couches voisines de celle-ci, laquelle peut être déviée en s'opposant à la force de rappel de son matériau d'une position de repos transversale au plan de stratification de la couche qui présente la proéminence (12).

8. Dispositif de mesure selon l'une des revendications 2 à 7, **caractérisé en ce qu'**au moins un capteur est disposé dans le fond (11) du creux (10) pour examiner le fluide (2) qui se trouve dans le creux (10).

9. Dispositif de mesure selon l'une des revendications 2 à 8, **caractérisé en ce qu'**une membrane à sélection d'ions est disposée dans le creux (10), laquelle vient de préférence en prise à l'arrière d'une proéminence (12) de la paroi de délimitation du creux (10).

10. Dispositif de mesure selon l'une des revendications 2 à 9, **caractérisé en ce que** la pile de couches (4) présente plusieurs creux (10) disposés en forme de réseau et ayant de préférence des dimensions différentes, lesquels sont respectivement contigus aux au moins deux couches ou zones de couche optiquement transparentes (7a, 7b, 7c, 8a, 8b, 8c), et qu'au moins une des couches ou zones de couche optiquement transparentes (8a, 8b, 8c) qui sont contiguës au creux correspondant est disposée à un certain écart du fond (11) du creux (10).

11. Procédé de fabrication d'un dispositif de mesure selon l'unes des revendications 1 à 10, une couche support (3) étant munie d'une pile de couches (4) en appliquant des couches, laquelle présente au moins deux couches électriquement conductrices et/ou optiquement transparentes entre lesquelles est disposée au moins une couche intermédiaire électriquement conductrice et/ou optiquement isolante, un creux (10) étant aménagé dans la pile de couches (4) sur le côté de la pile de couches (4) à l'opposé de la couche support (3), lequel entrecoupe les couches électriquement conductrices et/ou optiquement transparentes et/ou est contigu latéralement à celles-ci.

12. Procédé selon la revendication 11, la couche électriquement conductrice et/ou optiquement transparente espacée du fond du creux étant divisée en au moins deux zones de couche électriquement conductrices et/ou optiquement transparentes (5a, 5b, 5c, 6a, 6b, 6c, 6d, 6e, 6f, 7a, 7b, 7c, 8a, 8b, 8c) qui sont isolées électriquement et/ou optiquement les unes des autres.

13. Procédé selon la revendication 11 ou 12,
**caractérisé en ce qu'**un retrait par rapport à une couche électriquement conductrice et/ou optiquement transparente voisine et/ou une zone de couche électriquement conductrice et/ou optiquement transparente voisine (5a, 5b, 5c, 6a, 6b, 6c, 6d, 6e, 6f) est formé sur la paroi de délimitation du creux (10) dans la zone d'une couche électriquement et/ou optiquement isolante et/ou d'une zone de couche électriquement et/ou optiquement isolante (7a, 7b, 7c, 8a, 8b, 8c) en enlevant du matériau de couche.

14. Procédé selon l'une des revendications 11 à 13, **caractérisé en ce que** pour aménager le creux (10), la pile de couches (4) est mise en contact avec un agent corrosif et que les matériaux des couches et/ou des zones de couche (5a, 5b, 5c, 6a, 6b, 6c, 6d, 6e, 6f, 7a, 7b, 7c, 8a, 8b, 8c, 9, 9a, 9b) individuelles sont sélectionnés en vue de former le retrait dans la paroi de délimitation du creux (10) de telle sorte qu'ils présentent des taux de corrosion différents face à l'agent corrosif.

15. Procédé selon l'une des revendications 11 à 14, **caractérisé en ce que** le support (3) est muni d'une pile de couches (10) qui présente transversalement au plan de stratification de ses couches, des deux côtés d'une couche optiquement transparente ou d'une zone de couche optiquement transparente (7a, 7b, 7c, 8a, 8b, 8c), à chaque fois une couche métallique ou une zone de couche métallique (5a, 5b, 5c, 6a, 6b, 6c, 6d, 6e, 6f) faisant office de couche de réflexion optique.

16. Procédé selon l'une des revendications 11 à 15, **caractérisé en ce qu'**un capteur est disposé dans la zone du fond du creux (10) ou dans une zone du support (3) ou de la pile de couches (4) prévue pour la zone de fond.

17. Procédé selon l'une des revendications 11 à 16, **caractérisé en ce qu'**une membrane à sélection d'ions est disposée dans le creux (10)

18. Procédé selon l'une des revendications 11 à 17, **caractérisé en ce que** plusieurs creux (10) disposés en forme de réseau et ayant de préférence des dimensions différentes sont disposés dans la pile de couches (4).
